# EUROPÄISCHE PATENTANMELDUNG

(11) **EP 3 208 999 A1**
(43) Veröffentlichungstag der Anmeldung: **23.08.2017**
(21) Anmeldenummer: 16156089.1
(22) Anmeldetag: 17.02.2016
(51) Int. Cl.: H04L 29/08

(54) **DATENÜBERTRAGUNGSSYSTEM SOWIE VERFAHREN ZUR DATENÜBERTRAGUNG**

(71) Anmelder: Siemens Aktiengesellschaft, 80333 München (DE)
(72) Erfinder: HOFMANN, Klaus-Peter, 91086 Aurachtal-Münchaurach (DE); RIPPLINGER, Thomas, 76149 Karlsruhe (DE)

(57) **Zusammenfassung**

Die Erfindung betrifft ein Datenübertragungssystem umfassend zumindest einen ersten Teilnehmer und einen zweiten Teilnehmer, wobei der zweite Teilnehmer in einem Automatisierungsnetz einer Automatisierungsanlage angeordnet ist, umfassend eine Kommunikationsschnittstelle zur bidirektionalen Datenübertragung zwischen dem ersten Teilnehmer und dem zweiten Teilnehmer, wobei die Kommunikationsschnittstelle als ein Agent-Gateway ausgestaltet ist.

Weiterhin betrifft die Erfindung ein Verfahren zur Datenübertragung.

## Beschreibung

Die Erfindung betrifft ein Verfahren zur Datenübertragung sowie ein Datenübertragungssystem umfassend zumindest einen ersten Teilnehmer sowie einen zweiten Teilnehmer, wobei der zweite Teilnehmer in einem Automatisierungsnetz einer Automatisierungsanlage angeordnet ist, umfassend eine Kommunikationsschnittstelle zur bidirektionalen Datenübertragung zwischen dem ersten Teilnehmer und dem zweiten Teilnehmer.

Als Automatisierungsanlage einer Automatisierungsanlage werden im folgenden Geräte und Installationen bezeichnet, die zur Steuerung und/oder Überwachung eines technischen Prozesses, z. B. eines Fertigungsprozesses, eingesetzt werden und an sich bekannt sind. Zu den Geräten gehören z. B. speicherprogrammierbare Steuerungen, dezentrale Peripheriegeräte, Bedien- und Beobachtungssysteme oder dergleichen, welche zu einem gemeinsamen Automatisierungsnetz über eine Datenübertragungseinheit, z. B. ein LAN-Netzwerk (LAN = Local Area Network), miteinander verbunden sind. Solche Geräte oder Netze werden zusammenfassend als Automatisierungskomponenten bezeichnet. Im Umfeld "IoT" (Internet of Things) werden Daten gesammelt und genutzt, um durch Analyse-Methoden Mehrwerte zu generieren. Die Datenverarbeitung erfolgt hierbei zentralisiert in einem externen Rechenzentrum bzw. Cloud-System.

Zur Nutzung dieser Mehrwerte übergibt der Anlagenbetreiber ausgewählte Daten an einen Analyse-Provider. Die kontrollierte Auskopplung von lokalen Anlagen-Daten einer Automatisierungsanlage über eine Internet-Verbindung stellt dabei eine besondere Herausforderung dar: Der Anlagenbetreiber möchte Transparenz und volle Kontrolle über Art und Umfang der weitergegebenen Daten.

Das Abgreifen von Anlagendaten aus dem Automatisierungs-System oder anderen lokalen Geräten einer Automatisierungsanlage ("IoT Daten") erfolgt in der Regel über sog. "Agenten" innerhalb des lokalen Netzwerks (LAN-Netzwerkes). Softwareagenten sind dabei abgrenzbare Hardware-/Software-Einheiten, die definierte Ziele selbstständig verfolgen, indem sie mit ihrer Umgebung und anderen Agenten interagieren. Dabei können die Agenten über das LAN ein Agentensystem ausbilden. Die Auskopplung der Daten erfolgt anhand festgelegter Datenpunkt-Transfer-Listen bzw. Transfer-Regeln. D.h. ein Agent liest Daten aus den unterlagerten Systemen und leitet diese über eine ausgehende Verbindung via Internet an das Cloud-System weiter. Falls in der Automatisierungsanlage mehrere verschiedene Datenquellen vorhanden sind (z.B. mehrere Teilanlagen oder Aggregate) kommen unter Umständen mehrere Agenten zum Einsatz. Zur Übertragung der Daten an das Cloud System werden standardisierte oder herstellerspezifische Protokolle verwendet. Bestandteil solcher Protokolle ist in der Regel ein "Datenmodell", welches die Semantik (Bedeutung) der transferierten Daten festlegt. Ein Datenmodell ist ein Modell der zu beschreibenden und verarbeitenden Daten der Automatisierungsanlage und ihrer Beziehungen zueinander. Durch Datenmodelle kann die Struktur für die in den Systemen zu verarbeitenden und zu speichernden Daten gefunden und festgelegt werden. Ein Beispiel eines solchen hier gemeinten Datenmodells findet sich in der Figurenbeschreibung.

Die unterlagerten Systeme, insbesondere solche älterer Bauart, bieten in der Regel keinen feingranularen Zugriffsschutz auf die vorhandenen Daten. Art und Umfang der ausgekoppelten Daten sind nicht immer transparent sichtbar. Zudem müssen die Daten verschlüsselt übertragen werden. Nicht jede Hardware unterstützt die notwendigen Mechanismen zur Verschlüsselung oder es ist ein erhöhter Hardware und Administrationsaufwand erforderlich, z.B. über einen VPN Tunnel.

Die Agenten lesen dabei Daten aus der unterlagerten Automatisierungsanlage und leiten diese über eine ausgehende Verbindung via Internet an das Cloud-System weiter.

Werden mehrere Agenten eingesetzt, erfolgt in aller Regel eine Bündelung der Kommunikation über einen sogenannten Proxy im Kunden-Netzwerk, von dort aus erfolgt der Übergang ins Internet. Je nach Hersteller des Agenten sind unterschiedliche Möglichkeiten zur Konfiguration des Datentransfers vorhanden (z.B. Tool zur Zusammenstellung von Transferlisten).

Mit einem solchen Proxy ist jedoch keine feingranulare, unabhängige Kontrolle des Datenflusses aus der Automatisierungsanlage durch den Kunden möglich. Die Transparenz und Nachvollziehbarkeit ist abhängig von den Konfigurations-Möglichkeiten des eingesetzten Agentensystems. Es gibt keine "unabhängige" Instanz zur Kontrolle des Datenflusses. Der Datenverkehr am zentralen Proxy (falls vorhanden) ist nicht transparent einsehbar.

Der Erfindung liegt daher als eine erste Aufgabe die Angabe eines Datenübertragungssystems zugrunde, welches eine unabhängige Kontrolle des Datenflusses aus dem Automatisierungsnetz ermöglicht. Eine zweite Aufgabe liegt in der Angabe eines korrespondierenden Verfahrens, welches insbesondere auf dem Datenübertragungssystem durchführbar ist.

Die erste Aufgabe wird gelöst durch die Angabe eines Datenübertragungssystems umfassend zumindest einen ersten Teilnehmers und einen zweiten Teilnehmers, wobei der zweite Teilnehmer in einem Automatisierungsnetz einer Automatisierungsanlage angeordnet ist, umfassend eine Kommunikationsschnittstelle zur bidirektionalen Datenübertragung zwischen dem ersten Teilnehmer und dem zweiten Teilnehmer, wobei die Kommunikationsschnittstelle als ein Agent-Gateway ausgestaltet ist.

Die auf das Verfahren bezogene Aufgabe wird gelöst durch die Angabe eines Verfahrens zur Datenübertragung mit zumindest einem ersten Teilnehmer und einem zweiten Teilnehmer, wobei der zweite Teilnehmer in einem Automatisierungsnetz einer Automatisierungsanlage angeordnet wird, und wobei die bidirektionale Datenübertragung zwischen dem ersten und dem zweiten Teilnehmer durch eine Kommunikationsschnittstelle vorgenommen wird, wobei die Kommunikations-schnittstelle als ein Agent-Gateway ausgestaltet wird.

Dabei versteht man unter Agent-Gateway ein Gateway, welches als ein Agent ausgestaltet ist bzw. als ein solcher als Gateway agiert und interagiert.

Dabei kann als Agent(ensoftware / Softwareagent) eine Software mit einem definierten Ziel verstanden werden, welche zumindest ein autonomes Verhalten zur Erreichung dieses Ziels aufweist und welche zur Interaktion mit der Umgebung und anderen Agenten fähig ist. Dabei kann es sich um einen deliberativen Softwareagenten, reaktiven Softwareagenten, oder hybriden Softwareagenten handeln. Der Begriff Gateway ist in der Informatik gebräuchlich und hinsichtlich dieser Bedeutung auch zu verstehen.

Unter Daten sind nachfolgend insbesondere Maschinen- und Anlagendaten zu verstehen.

Erfindungsgemäß werden nun die Maschinen- und Anlagendaten über ein zentrales Agent-Gateway ausgekoppelt. Im Gegensatz zu einem herkömmlichen Proxy hat das Agent-Gateway Kenntnis über die verwendeten Datenprotokolle und somit über die Datenmodelle zwischen "Agent" und "Cloud". Dadurch wird die volle Transparenz über ausgehende Daten ermöglicht, d.h., es ist eine transparente Darstellung des Datenverkehrs möglich. Ferner ist durch die Erfindung auch eine Selektion der Daten als auch eine feingranulare Steuerung unabhängig von der Agenten-Konfiguration möglich.

In den Unteransprüchen sind weitere vorteilhafte Maßnahmen aufgelistet, die beliebig miteinander kombiniert werden können, um weitere Vorteile zu erzielen.

Erfindungsgemäß ist zumindest ein Datenübertragungsnetz vorgesehen, wobei der erste Teilnehmer als auch das Agent-Gateway an das Datenübertragungsnetz bidirektional angebunden ist. Dabei kann das Datenübertragungsnetz das Internet sein.

Bevorzugt ist das Agent-Gateway zwischen dem zweiten Teilnehmer und dem Datenübertragungsnetz angeordnet. Dabei kann dem Agent-Gateway aus Sicherheitsgründen eine Firewall vor- als auch oder zusätzlich nachgeschaltet sein. Dabei kann es sich um eine Standard-Firewall zur Erhöhung der Datensicherheit handeln.

In einer weiteren Ausgestaltung sind der erste Teilnehmer und der zweite Teilnehmer als physikalisch voneinander separierte Einheiten ausgebildet. Dabei ist der zweite Teilnehmer als ein externes Rechenzentrum, insbesondere ein Rechenzentrum zum Ausführen von Cloud Computing, ausgebildet. Dies bedeutet dass der zweite Teilnehmer vorteilhafterweise eine sogenannte Cloud ist.

In einer besonderen Ausgestaltung ist der erste Teilnehmer ein Agentensystem, umfassend zumindest eines Agenten, welcher Anlagendaten aus dem Automatisierungsnetz und/oder anderen lokalen Geräten der Automatisierungsanlage abgreift. Durch das Agent-Gateway ist der zumindest eine Agent des Agentensystems gezielt blockierbar oder freigebbar.

Auch ist durch das Agent-Gateway eine Funktion des zumindest einen Agenten des Agentensystems gezielt sperrbar oder freigebbar. Beispielsweise kann dies ein Update der Konfiguration per Remote oder ein Download von Dateien sein. Dies bedeutet, dass das Agent-Gateway eine Filter-Funktion wahrnimmt, beispielsweise ein Lock Konfig Update. Auch ist damit ein "metering and bandwidth shaping", d.h. eine Bandbreitenmessung und Bandbreitenzuteilung möglich. Dies bedeutet, dass eine Begrenzung der verwendeten Bandbreite für den Datentransfer ermöglicht wird.

Auch kann nun in einer weiteren erfindungsgemäßen Ausgestaltung die Verschlüsselung der Daten im Agent-Gateway, d.h. an zentraler Stelle, erfolgen. Dadurch ergibt sich eine sichere Übertragung. Auch kann dadurch eine Zertifizierung der Daten, d.h. digitale Zertifikate für die Authentifizierung, durch eine Zertifikatsverwaltung im Agent-Gateway vorgesehen sein. Dadurch ist eine Verschlüsselung auch dann möglich, falls diese von dem ersten Teilnehmer, z.B. dem Agenten im lokalen LAN der Automatisierungsanlage nicht vorgesehen ist.

Zusätzlich kann das Agent-Gateway quasi eine Audit-Funktion übernehmen. Sind mehrere Agenten im Agentensystem verfügbar, so ist daher durch das Agent-Gateway eine Auflistung aller verfügbaren Agenten im Agentensystem bewerkstelligbar. Dies wird aus dem Protokoll und dem Datenverkehr abgeleitet. Auch ist eine Auflistung der Meta-Daten pro Agent (d.h. welche Daten werden an die Cloud geschickt), welche aus Datenmodell und Datenstrom abgeleitet wird, möglich. Somit lässt sich der Datenverkehr transparent darstellen.

In einer bevorzugten Ausgestaltung kann durch das Agent-Gateway ein zeitversetztes Senden der Daten erfolgen. Dabei werden die Daten der Agenten erst nach einem Ablauf von mehreren Stunden oder Minuten (zeitverzögert) geschickt. Auch können nur bei Bedarf die letzten vorgegebenen Stunden geschickt werden, sozusagen ein "send on demand" im Servicefall. Dies ermöglicht zudem den Einsatz eines Ringpuffers.

Weitere Merkmale, Eigenschaften und Vorteile der vorliegenden Erfindung ergeben sich aus der nachfolgenden Beschreibung unter Bezugnahme auf die beiliegende Figur. Darin zeigt schematisch:

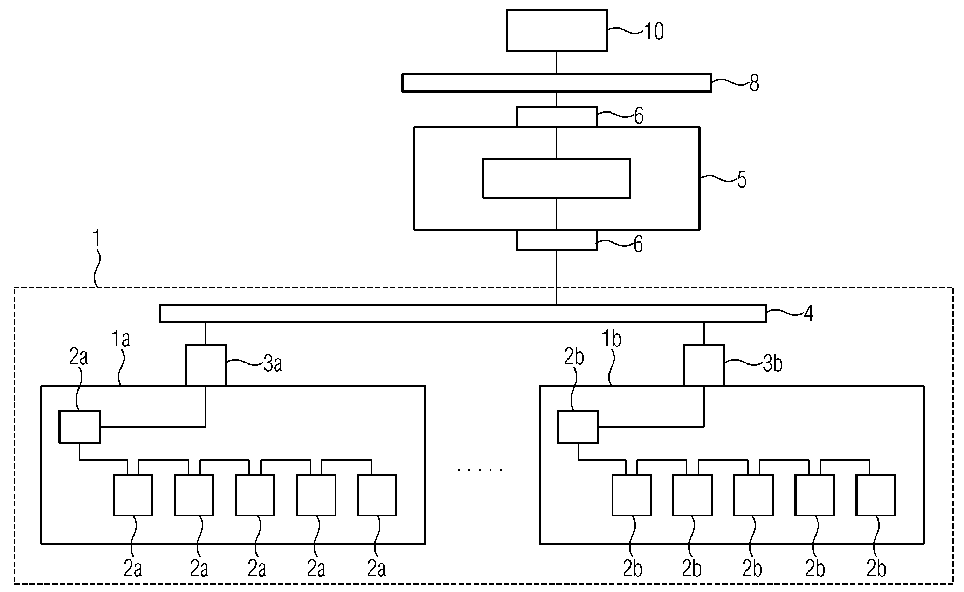

FIG 1: ein erfindungsgemäßes Datenübertragungssystem.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

FIG 1 zeigt eine Automatisierungsanlage 1. Dabei werden Anlagendaten aus lokalen Geräten 2a, 2b einer Anlageneinheit 1a, 1b der Automatisierungsanlage 1 ("IoT Daten") über Agenten 3a, 3b innerhalb des lokalen Netzwerks 4 (LAN-Netzwerkes) abgegriffen. Softwareagenten sind dabei abgrenzbare Hardware-/Software-Einheiten, die definierte Ziele selbstständig verfolgen, indem sie mit ihrer Umgebung und anderen Agenten interagieren. Dabei können die Agenten über das (corporate) LAN 4 ein Agentensystem ausbilden.

Im Stand der Technik erfolgt nun in aller Regel eine Bündelung der Kommunikation über einen Proxy und von dort aus erfolgt der Übergang ins Internet. Der Datenverkehr am Proxy ist jedoch nicht transparent einsehbar. Transparenz und Nachvollziehbarkeit ist abhängig von den Konfigurationsmöglichkeiten des eingesetzten Agenten-Systems. Der Proxy hat daher keine Kenntnis der Protokolle und kann daher keine feingranularen Eingriffsmöglichkeiten erlauben, z.B. einen Agenten der Automatisierungsanlage sperren. Dies wird mit der Erfindung nun vermieden.

Erfindungsgemäß wird nun ein Agent-Gateway 5 zwischen dem Agenten 3a,3b des LAN 4 bzw. dem Agentensystem und dem zweiten Teilnehmer geschaltet. Hierbei kann das eine Cloud 10 sein. Vor und nach dem Agent-Gateway 5 kann zudem eine Firewall 6 vor- bzw. nachgeschalten sein. Das Agent-Gateway 5 empfängt die Daten der Agenten 3a,3b über LAN 4 und leitet diese beispielsweise über bzw. in ein public Internet 8 an die dafür vorgesehene Cloud 10 weiter. Auch können selbstverständlich sogenannte "Private Clouds" vorgesehen sein, bei denen die Bereitstellung über ein firmeninternes Intranet erfolgt.

Das erfindungsgemäße Agent-Gateway 5 stellt somit für die Agenten 3a,3b auch einen zentralen Zugangspunkt zum Internet 8 dar.

Dabei ist die Basisfunktionalität des Agent-Gateway 5 die Weiterleitung der Daten. Selbstverständlich können hier weiterhin standardisierte Protokolle oder herstellerspezifische Protokolle (ISB) verwendet werden. Im Gegensatz zu einem herkömmlichen Proxy hat das Agent-Gateway jedoch Kenntnis über die verwendeten Datenprotokolle und somit über die Datenmodelle zwischen Agent 3a,3b und Cloud 10.

Dabei kann ein solches Datenmodell für den Datentransfer von den Agenten 3a,3b zu der Cloud 10 z.B. folgendermaßen aussehen: In der Anlageneinheit 1a/1b sind Meßstellen 1,..,n vorgesehen, welche Daten, z.B. den Zeitstempel und Meßwerte aufweisen und Meldungen 1,.n, welche Daten z.B. den Zeitstempel und einen Meldetext aufweisen:
Anlageneinheit 1a:
   - Agent 3a
      - Messtelle 1 (Daten, z.B. Zeitstempel, Messwerte)
      - Messtelle 2 (Daten, z.B. Zeitstempel, Messwerte)...
      - Messtelle n (Daten, z.B. Zeitstempel, Messwerte)
      - Meldung 1 (Daten, z.B. Zeitstempel, Meldetext)...
   - Agent ...
Anlageneinheit 1b:
   - Agent 3b
      - Messtelle 1 (Daten, z.B. Zeitstempel, Messwerte)
      - Messtelle 2 (Daten, z.B. Zeitstempel, Messwerte)
      - Messtelle n (Daten, z.B. Zeitstempel, Messwerte)...
      - Meldung 1 (Daten, z.B. Zeitstempel, Meldetext)...
   - Agent ...
      - Messtelle 1 (Daten, z.B. Zeitstempel, Messwerte)
      - Messtelle 2 (Daten, z.B. Zeitstempel, Messwerte)
      - Messtelle n (Daten, z.B. Zeitstempel, Messwerte)...
      - Meldung 1 (Daten, z.B. Zeitstempel, Meldetext)...
.
.
.
Anlageneinheit n:
   - Agent 3n
      - Messtelle 1 (Daten, z.B. Zeitstempel, Messwerte)
      - Messtelle 2 (Daten, z.B. Zeitstempel, Messwer-te)...
      - Messtelle n (Daten, z.B. Zeitstempel, Messwerte)
      - Meldung 1 (Daten, z.B. Zeitstempel, Meldetext)...

Der Agent 3a,3b (bis Agent 3n, welcher nachfolgend nicht mehr erwähnt wird) kann quasi Daten aus den Datenstrom extrahieren. Ein Datenmodell ist daher als ein Modell der zu beschreibenden und verarbeitenden Daten und ihrer Beziehungen zueinander beschreibbar.

Durch Kenntnis des Datenmodells ermöglicht das Agent-Gateway 5 zum einen die transparente Darstellung des Datenverkehrs: Aus Protokoll und Datenverkehr abgeleitet kann eine Auflistung aller Agenten 3a,3b innerhalb der Automatisierungsanlage 1 erfolgen. Zudem ist es möglich, aus dem Datenmodell und dem Datenstrom eine Auflistung der Meta-Daten und der Daten pro Agent, d.h. welche Daten werden an die Cloud geschickt, abzuleiten. Meta-Daten sind dabei Daten, die Informationen über Merkmale anderer Daten enthalten, aber nicht diese Daten selbst.

Durch die Erfindung ist zudem ein Eingriff in den Datenverkehr möglich. Somit können beispielsweise Agenten 3a, 3b gezielt blockiert oder freigegeben werden. Zudem ist es nunmehr möglich, auch einzelne Agenten-Funktionen, z.B. Entscheidungsfunktion, gezielt zu sperren. Dabei können Agentenfunktionen z.B. das Sperren von Download von Dateien, oder z.B. ein Update der Konfiguration sein.

Auch ist durch die Erfindung ein zeitversetztes Senden der Daten möglich. So können die durch die Agenten 3a,3b gesendeten Daten erst nach z.B. mehreren Stunden geschickt bzw. nur bei Bedarf die Daten der letzten Stunden an die Cloud 10 geschickt werden (send on demand). Dabei kann das Agent-Gateway 5 mit einem Ringpuffer mit einer festen Größe ausgestattet sein.

Zudem kann eine Begrenzung der verwendeten Bandbreite für den Datentransfer erfolgen.

Zusätzlich kann an dem Agent-Gateway 5 die Verschlüsselung der Daten erfolgen, d.h. die Verschlüsselung erfolgt nun an einer zentraler Stelle. Dies ist insbesondere vorteilhaft, falls das der Agent 3a,3b nicht selber vorsieht. Auch kann eine Zertifizierung der Daten, d.h. digitale Zertifikate für die Authentifikation, durch eine Zertifikatsverwaltung im Agent-Gateway 5 vorgesehen sein.

Durch die erfindungsgemäße transparente Darstellung des Datenverkehrs ist zudem ein Eingriff in den Datenverkehr und eine Verschlüsselung der Daten an zentraler Stelle möglich.

Als Vorteile für den Anlagenbetreiber sind daher insbesondere die Auditfunktion, d.h. die volle Transparenz über ausgehende Daten, die Daten-Kontrolle, Selektion, sowie die feingranulare Steuerung unabhängig von Agenten-Konfiguration als auch die sichere, verschlüsselte Übertragung der Daten zu nennen.

## Patentansprüche

1. Datenübertragungssystem, umfassend zumindest einen ersten Teilnehmer und einen zweiten Teilnehmer, wobei der zweite Teilnehmer in einem Automatisierungsnetz einer Automatisierungsanlage (1) angeordnet ist, umfassend eine Kommunikationsschnittstelle zur bidirektionalen Datenübertragung zwischen dem ersten Teilnehmer und dem zweiten Teilnehmer,
**dadurch gekennzeichnet, dass** die Kommunikationsschnittstelle als ein Agent-Gateway (5) ausgestaltet ist.

2. Datenübertragungssystem nach Anspruch 1,
**dadurch gekennzeichnet, dass** zumindest ein Datenübertragungsnetz, insbesondere ein Internet (8), vorgesehen ist, wobei der erste Teilnehmer als auch das Agent-Gateway (5) an das Datenübertragungsnetz bidirektional angebunden ist.

3. Datenübertragungssystem nach Anspruch 2,
**dadurch gekennzeichnet, dass** das Agent-Gateway (5) zwischen dem zweiten Teilnehmer und Datenübertragungsnetz angeordnet ist.

4. Datenübertragungssystem nach einem der vorhergehenden Ansprüche ,
**dadurch gekennzeichnet, dass** der erste Teilnehmer und der zweite Teilnehmer als physikalisch voneinander separierte Einheiten ausgebildet sind.

5. Datenübertragungssystem nach einem der vorhergehenden Ansprüche,
**dadurch gekennzeichnet, dass** der zweite Teilnehmer ein externes Rechenzentrum, insbesondere eine Cloud (10), ist.

6. Datenübertragungssystem nach einem der vorhergehenden Ansprüche,
**dadurch gekennzeichnet, dass** der erste Teilnehmer ein Agentensystem, umfassend zumindest eines Agenten (3a,3b), welcher Anlagendaten aus dem Automatisierungsnetz und/oder anderen lokalen Geräten (2a,2b) der Automatisierungsanlage (1) abgreift, ist.

7. Datenübertragungssystem nach Anspruch 6,
**dadurch gekennzeichnet, dass** durch das Agent-Gateway (5) der zumindest eine Agent (3a,3b) des Agentensystems gezielt blockierbar oder freigebbar ist.

8. Datenübertragungssystem nach Anspruch 6 oder 7,
**dadurch gekennzeichnet, dass** durch das Agent-Gateway (5) eine Funktion des zumindest einen Agenten des Agentensystems gezielt sperrbar oder freigebbar ist.

9. Datenübertragungssystem nach einem der vorhergehenden Ansprüche,
**dadurch gekennzeichnet, dass** dem Agent-Gateway (5) eine Firewall (6) vorschaltet ist.

10. Datenübertragungssystem nach einem der vorhergehenden Ansprüche,
**dadurch gekennzeichnet, dass** dem Agent-Gateway (5) eine Firewall (6) nachgeschaltet ist.

11. Datenübertragungssystem nach einem der vorhergehenden Ansprüche,
**dadurch gekennzeichnet, dass** die Verschlüsselung der Daten im Agent-Gateway (5) erfolgt.

12. Datenübertragungssystem nach einem der vorhergehenden Ansprüche,
**dadurch gekennzeichnet, dass** mehrere Agenten (3a,3b) im Agentensystem vorgesehen sind, wobei durch das Agent-Gateway (5) eine Auflistung aller verfügbaren Agenten (3a,3b) im Agentensystem bewerkstelligbar ist.

13. Verfahren zur Datenübertragung mit zumindest einen ersten Teilnehmer und einem zweiten Teilnehmer, wobei der zweite Teilnehmer in einem Automatisierungsnetz einer Automatisierungsanlage angeordnet wird und wobei die bidirektionale Datenübertragung zwischen dem ersten Teilnehmer und dem zweiten Teilnehmer durch eine Kommunikationsschnittstelle vorgenommen wird,
**dadurch gekennzeichnet, dass** die Kommunikationsschnittstelle als ein Agent-Gateway (5) ausgestaltet wird.

14. Verfahren zur Datenübertragung nach Anspruch 13,
**dadurch gekennzeichnet, dass** das Agent-Gateway (5) eine Data Control Funktion mit zumindest eine der nachfolgenden Funktionen aufweist:
- Zeitversetztes Senden der Daten,
- Filtern der Daten,
- Verschlüsselung der Daten.

15. Verfahren zur Datenübertragung nach einem der vorhergehenden Ansprüche 13-14,
**dadurch gekennzeichnet, dass** der erste Teilnehmer als ein Agentensystem, umfassend zumindest eines Agenten, welcher Anlagendaten aus dem Automatisierungsnetz und/oder anderen lokalen Geräten (2a,2b) der Automatisierungsanlage (1) abgreift, ausgestaltet wird.

16. Verfahren zur Datenübertragung nach einem der vorhergehenden Ansprüche 15,
**dadurch gekennzeichnet, dass** durch das Agent-Gateway (5) der zumindest eine Agent (3a,3b) des Agentensystems gezielt blockierbar oder freigebbar ist.

17. Verfahren zur Datenübertragung nach Anspruch 15 oder 16,
**dadurch gekennzeichnet, dass** durch das Agent-Gateway eine Funktion des zumindest einen Agenten des Agentensystems gezielt gesperrt oder freigegeben wird.

18. Verfahren zur Datenübertragung nach einem der vorhergehenden Ansprüche 15-17,
**dadurch gekennzeichnet, dass** das Agent-Gateway eine Audit Funktion mit zumindest eine der nachfolgenden Funktion aufweist:
- Auflistung aller verfügbaren Agenten im Agentensystem,
- Filtern der Daten,
- Auflistung der Daten und Meta-Daten, welche pro Agent (3a,3b) versendet werden.
